# EUROPÄISCHE PATENTSCHRIFT

(11) **EP 1 370 107 B1**
(45) Veröffentlichungstag und Bekanntmachung des Hinweises auf die Patenterteilung: **04.07.2007**
(21) Anmeldenummer: 03090124.3
(22) Anmeldetag: 24.04.2003
(51) Int. Cl.: H04Q 7/38, H04Q 3/00, H04M 3/42

(54) **Verfahren und Anordnung zum Zugreifen auf Rufnummernportabilitätsdaten**
Method and apparatus to access call number portability data
Méthode et appareil pour accéder à des données de portabilité de numéros

(30) Priorität: 07.06.2002 DE 10226344
(43) Veröffentlichungstag der Anmeldung: 10.12.2003
(73) Patentinhaber: SIEMENS AKTIENGESELLSCHAFT, 80333 München (DE)
(72) Erfinder: Berg, Andreas, 13591 Berlin (DE); Klatt, Uwe, 0451 Oslo (NO); Ryll, Thomas, 10823 Berlin (DE)

(56) Entgegenhaltungen:
- US-A- 5 572 579
- GIORDANO A ET AL: "PCS NUMBER PORTABILITY" IEEE INTERNATIONAL SYMPOSIUM ON PERSONAL, INDOOR AND MOBILE RADIO COMMUNICATIONS, XX, XX, 18. September 1994 (1994-09-18), Seiten 1146-1150, XP002037912
- "Digital cellular telecommunications system (Phase 2+) (GSM);Universal Mobile Telecommunications Systems (UMTS); Support of Mobile Number Portability (MNP); Technical Realisation; State 2 (3GPP TS 23.066 version 4.0.0 Release 4)" ETSI TS 123 066 V4.0.0, XX, XX, März 2001 (2001-03), XP002199035

## Beschreibung

Im Rahmen der Liberalisierung der Telekommunikationsmärkte werden in zahlreichen Ländern der Welt Verfahren entwickelt, welche es Mobilfunkteilnehmern ermöglichen, beim Wechsel von einem Mobilfunknetzbetreiber zu einem anderen Mobilfunknetzbetreiber (z.B. desselben Landes) ihre Mobilfunkrufnummer (MSISDN = Mobile Station ISDN Number) zu behalten. Diese Verfahren sind unter dem Begriff "Mobile Number Portability" (MNP) bekannt. Allgemein sind ebenfalls MNP-Datenbanksysteme (MNP-Speicher) in Mobilfunknetzen bekannt, welche es den jeweiligen Mobilfunk-Netzbetreibern ermöglichen, im nationalen Rahmen Zuordnungen von Mobilfunkrufnummern zu Mobilfunknetzen des jeweiligen Landes zu speichern oder abzurufen. Auf derartige MNP-Speicher wird innerhalb des Mobilfunknetzes des jeweiligen Mobilfunknetzbetreibers zugegriffen.

Aus dem Artikel "PCS Number Portability" von A. Giordano et al., IEEE International Symposium on Personal, indoor and mobile radio communications 94, S. 1146 bis 1150 ist ein Verfahren bekannt, bei dem von einem Dienstesteuerungspunkt aus einer globalen Datenbank der zu einer persönlichen Rufnummer eines Telekommunikationsteilnehmers zugehörige Dienstanbieter ausgelesen wird.

Der Erfindung liegt die Aufgabe zugrunde, ein Verfahren und eine Anordnung anzugeben, mit denen die Nutzungsmöglichkeiten für in MNP-Speichern abgelegten Rufnummernportabilitätsdaten erweitert werden.

Diese Aufgabe wird durch ein Verfahren nach Anspruch 1 und eine Anordnung nach Anspruch 7 gelöst.

Diese Aufgabe wird erfindungsgemäß gelöst durch ein Verfahren zum Zugreifen auf in einem Mobile Number Portability Speicher (MNP-Speicher) eines Mobilfunknetzes abgelegte MNP-Daten durch eine Datenverarbeitungseinrichtung eines Fremd-Mobilfunknetzes, wobei die MNP-Daten in Form von Zuordnungsdaten zwischen Kennzeichen von Kommunikationsendgeräten und Einrichtungen der Heimat-Mobilfunknetze dieser Kommnunikationsendgeräte vorliegen, wobei bei dem Verfahren von einer signalflußbezogen zwischen der Datenverarbeitungseinrichtung und dem MNP-Speicher angeordneten Netzschnittstelle geprüft wird, ob die Datenverarbeitungseinrichtung zum Zugriff auf die MNP-Daten berechtigt ist, bei Vorliegen der Berechtigung ein Kennzeichen eines Kommunikationsendgerätes durch die Netzschnittstelle von der Datenverarbeitungseinrichtung zu dem MNP-Speicher übertragen wird, aus dem MNP-Speicher dem Kommunikationsendgerät zugeordnete MNP-Daten ausgelesen werden, und diese MNP-Daten über die Netzschnittstelle an die Datenverarbeitungseinrichtung übertragen werden. Dabei ist es besonders vorteilhaft, dass eine netzexterne Datenverarbeitungseinrichtung (also eine Einrichtung, welche sich nicht in dem Mobilfunknetz befindet, welchem der MNP-Speicher zugeordnet ist) unter Nutzung der Netzschnittstelle auf die MNP-Daten des MNP-Speichers zugreifen kann. Weiterhin ist vorteilhaft, dass die Netzschnittstelle vor dem Ermöglichen des Zugreifens überprüft, ob die externe Datenverarbeitungseinrichtung eine Berechtigung zum Zugriff auf die MNP-Daten bzw. zur Nutzung der MNP-Daten besitzt.

Das erfindungsgemäße Verfahren ist so ausgestaltet, dass zum Prüfen der Berechtigung der Datenverarbeitungseinrichtung seitens der Netzschnittstelle eine Authentifizierung und Autorisierung der Datenverarbeitungseinrichtung vorgenommen wird. Hierdurch wird vorteilhafterweise zum einen die Identität der externen Datenverarbeitungseinrichtung und zum anderen die Zugriffsberechtigung auf MNP-Daten festgestellt.

Das erfindungsgemäße Verfahren läuft so ab, dass von einer als Open Service Access Zwischenknoten (OSA-Zwischenknoten) ausgestalteten Netzschnittstelle die Authentifizierung und die Autorisierung nach "Open Service Access"(OSA)-Vorgaben durchgeführt werden.
Die Nutzung eines OSA-Zwischenknotens (OSA-Gateway) als Netzschnittstelle ist besonders vorteilhaft, weil mit der OSA-Technologie eine an sich bekannte, jedoch bisher für andere Zwecke verwendete Technologie dazu verwendet wird, Zugriffe von netzexternen MNP-Datennutzern auf MNP-Speicher zu ermöglichen. Dadurch lässt sich das erfindungsgemäße Verfahren mit geringem Aufwand und daher besonders kostengünstig realisieren.

Gemäß einer bevorzugten Ausführungsform werden die MNP-Daten über eine Netzschnittstelle übertragen, welche eine Zugriffseinheit in Form eines OSA-konformen Applikations-Programmier-Interfaces (API) aufweist. Durch eine derartige Ausgestaltung der Zugriffseinheit wird vorteilhafterweise ermöglicht, die in den OSA-Standards vorgesehenen Sicherheitsmechanismen und Sicherheitsinfrastrukturen beim Zugriff auf die MNP-Daten einzusetzen.

Das erfindungsgemäße Verfahren kann so ausgestaltet sein, dass als MNP-Daten eine Kennung des Heimat-Mobilfunknetzes des Kommunikationsendgerätes übertragen wird. Bei dieser Verfahrensausgestaltung wird es der netzexternen Datenverarbeitungseinrichtung vorteilhafterweise ermöglicht, das Heimatmobilfunknetz des Kommunikationsendgerätes zu ermitteln.

Das erfindungsgemäße Verfahren kann auch so ablaufen, dass als MNP-Daten eine Adresse einer Eintritts-vermittlungsstelle des Heimat-Mobilfunknetzes des Kommunikationsendgerätes übertragen wird. Hierbei wird zu der netzexternen Datenverarbeitungseinrichtung eine Information übertragen, welche es ihr ermöglicht, mit dem Heimatmobilfunknetz zu kommunizieren.

Das erfindungsgemäße Verfahren kann auch so ausgestaltet sein, dass als MNP-Daten Zugangsdaten eines dem Kommunikationsendgerät zugeordneten Zahlungssystems des Heimat-Mobilfunknetzes des Kommunikationsendgerätes übertragen werden. Durch die Übertragung der Zugangsdaten des Zahlungssystems wird es der netzexternen Datenverarbeitungseinrichtung vorteilhafterweise ermöglicht, das Zahlungssystem zu kontaktieren und dessen Dienste zur Abwicklung von das Kommunikationsendgerät bzw. einen Nutzer des Kommunikationsendgerätes betreffenden Zahlungen zu nutzen.

Das Verfahren kann erfindungsgemäß so ablaufen, dass von der als Zahlungssystem arbeitenden Datenverarbeitungseinrichtung eine den MNP-Speicher betreffende Zugriffsanfrage an die Netzschnittstelle übertragen wird, bei Vorliegen einer Berechtigung der Datenverarbeitungseinrichtung als Kennzeichen des Kommunikationsendgerätes eine Mobilfunkrufnummer zu dem MNP-Speicher übertragen wird, daraufhin aus dem MNP-Speicher als MNP-Daten die Zugangsdaten des dem Kommunikationsendgerät zugeordneten Zahlungssystems des Heimat-Mobilfunknetzes des Kommunikationsendgerätes ausgelesen werden, und diese Zugangsdaten an die Datenverarbeitungseinrichtung übertragen werden. Bei dieser Ausgestaltung des erfindungsgemäßen Verfahrens ist besonders vorteilhaft, dass zu dem Zahlungssystem des Fremd-Mobilfunknetzes (das als Datenverarbeitungseinrichtung arbeitet) die Zugangsdaten des Zahlungssystems, welches für das Heimatmobilfunknetz des Kommunikationsendgerätes zuständig ist, übertragen werden. Dadurch wird dem Zahlungssystem des fremden Mobilfunknetzes ermöglicht, das Kommunikationsendgerät betreffende Zahlungen in Zusammenarbeit mit dem Zahlungssystem des Heimatmobilfunknetzes dieses Kommunikationsendgerätes zu veranlassen bzw. durchzuführen.

Die obengenannte Aufgabe wird ebenfalls erfindungsgemäß gelöst durch eine Anordnung mit einem MNP-Speicher eines Mobilfunknetzes, der MNP-Daten in Form von Zuordnungsdaten zwischen Kennzeichen von Kommunikationsendgeräten und Einrichtungen der Heimat-Mobilfunknetze dieser Kommunikationsendgeräte enthält, und einer Netzschnittstelle des Mobilfunknetzes, die einen Zugriff einer Datenverarbeitungseinrichtung eines Fremd-Mobilfunknetzes auf die MNP-Daten ermöglicht, wobei die Netzschnittstelle eine Einheit zum Verhindern eines unberechtigten Zugriffs der Datenverarbeitungseinrichtung auf den MNP-Speicher aufweist.

Bei dieser Anordnung ist die Netzschnittstelle als ein nach "Open Service Access"-Vorgaben arbeitender Zwischenknoten ausgestaltet. Die Nutzung des OSA-Zwischenknotens ermöglicht es, die an sich bekannte OSA-Technik zur Realisierung einer Netzschnittstelle einzusetzen, welche Zugriffe von netzexternen Rechnern auf MNP-Datenbanken ermöglicht. Dadurch lässt sich die Anordnung mit geringem Aufwand und kostengünstig realisieren.

Die erfindungsgemäße Anordnung kann ein Teilnehmer-Zahlungssystem des Mobilfunknetzes, dessen Zugangsdaten als MNP-Daten in dem MNP-Speicher abgelegt sind, aufweisen. Durch diese Ausgestaltung der erfindungsgemäßen Anordnung wird vorteilhafterweise ein Zugriff der netzexternen Datenverarbeitungseinrichtung auf Zugangsdaten des Teilnehmerzahlungssystems ermöglicht. Dadurch wird eine Kommunikation zwischen der netzexternen Datenverarbeitungseinrichtung und dem Teilnehmer-Zahlungssystem-ermöglicht.

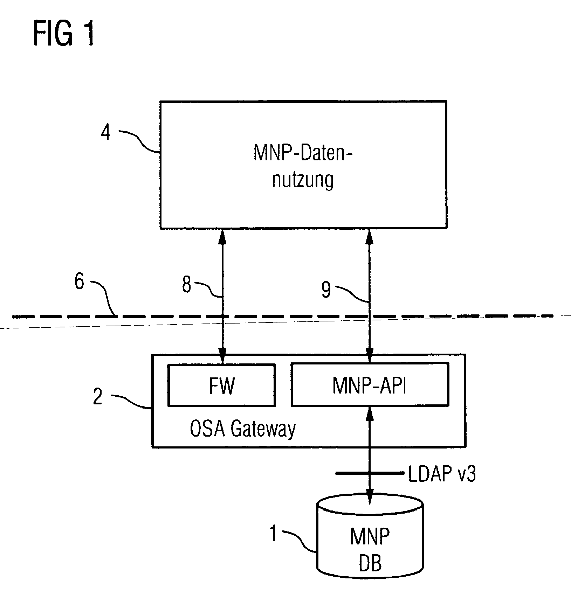

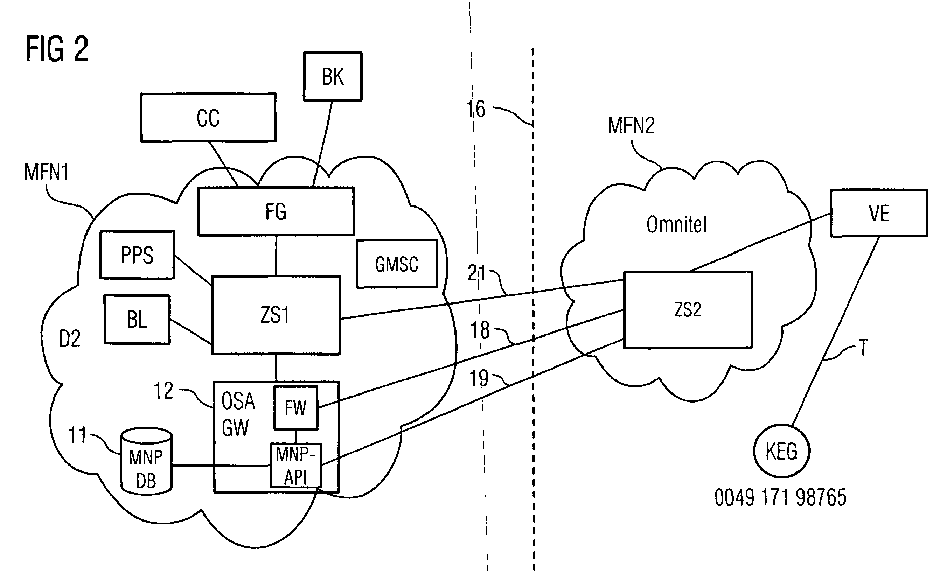

Zur weiteren Erläuterung der Erfindung ist in Figur 1 eine schematische Darstellung eines Ausführungsbeispiels einer erfindungsgemäßen Anordnung und eines erfindungsgemäßen Verfahrens, und in Figur 2 ein weiteres Ausführungsbeispiel der erfindungsgemäßen Anordnung und des erfindungsgemäßen Verfahrens bei der Durchführung von Zahlungsvorgängen in Mobilfunknetzen dargestellt.

In der Figur 1 ist ein MNP-Speicher 1 (MNP-Datenbank) dargestellt, welcher einem Mobilfunknetz zugeordnet ist. In dem MNP-Speicher sind MNP-Daten abgelegt. Unter MNP-Daten sind solche Daten zu verstehen, welche eine Zuordnung von einem Kennzeichen eines Kommunikationsendgerätes (beispielsweise der Mobilfunkrufnummer MSISDN) zu dessen Heimat-Mobilfunknetz, dessen Heimatnetzbetreiber oder Einrichtungen dieses Heimat-Mobilfunknetzes enthalten bzw. beschreiben. Dabei ist das Heimat-Mobilfunknetz eines Kommunikationsendgerätes beispielsweise dasjenige Netz, für das ein Vertrag zwischen dem jeweiligen Mobilfunknetzbetreiber und dem jeweiligen Kommunikationsendgerätebetreiber besteht.

Der MNP-Speicher 1 ist verbunden mit einer Netzschnittstelle 2, welche als ein Verbindungsknoten bzw. Zwischenknoten ausgestaltet ist, der nach Vorgaben des "Open Service Access"-Standards arbeitet. Ein derartiger OSA-Verbindungsknoten wird auch als OSA-Gateway bezeichnet. Als ein wesentlicher Bestandteil der Netzschnittstelle 2 ist eine Einheit FW (FW = OSA-Framework) und eine Zugriffseinheit MNP-API dargestellt. Die Funktionen der Einheit FW und der Zugriffseinheit MNP-API werden weiter unten erläutert.

Im oberen Teil der Figur 1 ist eine netzexterne Datenverarbeitungseinrichtung 4 dargestellt; dabei handelt es sich z. B. um ein Datenverarbeitungsgerät, welches außerhalb des Mobilfunknetzes angeordnet ist; dies ist durch die strichlierte Linie 6 angedeutet.

Nachfolgend ist ein Ausführungsbeispiel eines Ablaufes des erfindungsgemäßen Verfahrens beschrieben. Von der netzexternen Datenverarbeitungseinrichtung 4 aus soll ein Zugriff auf den MNP-Speicher 1 erfolgen, um in diesem Speicher abgelegte MNP-Daten auszulesen. Zu diesem Zweck sendet die Datenverarbeitungseinrichtung 4 über einen ersten Informationskanal 8 eine Zugriffsanfrage an die Netzschnittstelle 2. Diese Zugriffsanfrage wird an die Einheit FW geleitet. Die Einheit FW verhindert einen unberechtigten Zugriff von netzexternen Datenverarbeitungseinrichtungen auf den MNP-Speicher 1. Dazu führt die Einheit FW Funktionen durch, welche als solche aus den standardisierten Open Service Access-Mechanismen bekannt sind und beispielsweise in den Dokumenten "3GPP TS 29.198-3, V4.4.0, (2002-03), Technical Specification, 3rd Generation Partnership Project; Technical Specification Group Core Network; Open Service Access (OSA); Application Programming Interface (API); Part 3: Framework (Release 4)" und "3GPP TS 22.127, V5.3.0, (2003-03), Technical Specification, 3rd Generation Partnership Project; Technical Specification Group Services and System Aspects; Service aspects;
Stage 1 Service Requirement for the Open Service Access (OSA) (Release 5)" beschrieben sind. Die Einheit FW führt Authentifizierungsfunktionen durch, d. h. sie bestimmt die Identität der anfragenden Datenverarbeitungseinrichtung; sie führt Authorisierungsfunktionen durch, d. h. sie stellt fest, ob die netzexterne Datenverarbeitungseinrichtung 4 eine Berechtigung zum Zugriff auf den MNP-Speicher besitzt und sie erteilt derartige Berechtigungen. Bei einem positiven Überprüfungsergebnis ermöglicht die Einheit FW den Zugriff der netzexternen Datenverarbeitungseinrichtung 4 auf den MNP-Speicher 1 (Zugriffserteilung). Auf diese Weise stellt die Einheit FW die für den Zugriff auf sensible MNP-Daten notwendige Sicherheit her.

Nachdem von der Einheit FW die Berechtigungen überprüft wurden, wird erfindungsgemäß mit Hilfe der Zugriffseinheit MNP-API (MNP-API = Mobile Number Portability Application Programming Interface) der direkte Zugriff der Datenverarbeitungseinrichtung 4 auf die MNP-Daten des MNP-Speichers 1 ermöglicht. Die Zugriffseinheit MNP-API stellt also die eigentliche MNP-Daten-Schnittstelle zwischen der MNP-Datenbank 1 und dem MNP-Datennutzer 4 (und damit eine erfindungswesentliche Einheit) dar. Die Zugriffseinheit MNP-API wird in diesem Beispiel auf Grundlage der OSA-Technologie realisiert und stellt somit ein OSA-konformes "Application Programming Interface" (API) dar. Diese Zugriffseinheit MNP-API erlaubt es mobilfunknetzexternen Einrichtungen, eine ein Kennzeichen eines Kommunikationsendgerätes enthaltende Anfrage an den MNP-Speicher 1 zu stellen, wozu ein Datenkanal 9 verwendet wird. Ein derartiges Kennzeichen eines Kommunikationsendgerätes ist beispielsweise die Mobilfunkrufnummer MSISDN eines Mobilfunkteilnehmers. Weiterhin ermöglicht die Zugriffseinheit MNP-API der netzexternen Datenverarbeitungseinrichtung 4, im MNP-Speicher 1 abgespeicherte MNP-Daten (welche dem Kennzeichen des Kommunikationsendgerätes zugeordnet sind) abzufragen. Als derartige MNP-Daten können beispielsweise abgefragt und aus dem MNP-Speicher ausgelesen werden: die Zuordnung des Kommunikationsendgerätes bzw. dessen Benutzers (Mobilfunkteilnehmer) zu einem Mobilfunk-Heimatnetz-Betreiber, die Zuordnung des Kommunikationsendgerätes zu einer Adresse einer Eintritts-Vermittlungsstelle (Gateway-MSC,GMSC) des Heimatnetzes des Mobilfunkteilnehmers und/oder eine Zuordnung des Kommunikationsendgerätes zu einer Adresse eines dem Mobilfunkteilnehmer zugehörigen Bezahlsystems (Payment System). Über die Zugriffseinheit MNP-API können aber auch weitere Daten abgefragt werden, welche als MNP-Daten in dem MNP-Speicher 1 abgespeichert sind.

Die Zugriffseinheit MNP-API kann beispielsweise auf Basis von JAVA und/oder CORBA-Technologien mit Hilfe der "JAVA Database Connectivity"-Technologie von Sun Microsystems realisiert werden. Alternativ ist auch eine Verwendung der "Interface Definition Language" der "Object Management Group" möglich; diese Lösung ist vorteilhafterweise sprach- und implementationsunabhängig. Die Zugriffseinheit MNP-API ist in den OSA-Zwischenknoten (OSA-Gateway) integriert; ein derartiger OSA-Zwischenknoten kann auch andere Application Programming Interfaces (APIs) bereitstellen.

Zusammengefasst bietet also die Netzschnittstelle 2 mittels der Einheit FW (Framework) die Funktionen der Authentifizierung, Authorisierung und Zugriffserteilung an und führt diese durch. Mittels der Zugriffseinheit MNP-API wird durch die Netzschnittstelle der eigentliche Datenbankzugriff auf die MNP-Datenbank 1 realisiert, dabei wird von der Datenverarbeitungseinrichtung 4 eine Anfrage (die z. B. die Mobilfunkrufnummer des Kommunikationsendgerätes enthält) an die MNP-Datenbank 1 gestellt und die MNP-Datenbank 1 erteilt Auskunft über gespeicherte MNP-Daten betreffend beispielsweise Netzbetreiber, Gateway-MSC oder Bezahlsysteme.

Dabei kann das Verfahren so ablaufen, dass nach einer einmaligen Berechtigungsüberprüfung durch die Einheit FW mehrere Lesezugriffe auf den MNP-Speicher durchgeführt werden. Dies kann z. B. alle diejenigen Lese-Anfragen betreffen, die innerhalb eines Kontextes bzw. über eine "stehende" Verbindung 9 von der Datenverarbeitungseinrichtung 4 an die Zugriffseinheit MNP-API übermittelt werden. Die Verbindung der MNP-Datenbank 1 zu der Netzschnittstelle 2 kann beispielsweise unter Verwendung des "Lightweight Directory Access Protocol Version 3" (LDAPv3) realisiert werden.

In Figur 2 ist auf der linken Seite schematisch ein erstes Mobilfunknetz MFN1 und auf der rechten Seite ein zweites Mobilfunknetz MFN2 dargestellt. Bei dem ersten Mobilfunknetz MFN1 kann es sich beispielsweise um das Mobilfunknetz der Fa. D2 Vodafone in Deutschland handeln; bei dem zweiten Mobilfunknetz MFN2 kann es sich beispielsweise um das italienische Mobilfunknetz Omnitel handeln. Auf der rechten Seite der Figur 2 ist ein Kommunikationsendgerät KEG eines Mobilfunkteilnehmers dargestellt, der einen Mobilfunkvertrag mit der Fa. D2 Vodafone geschlossen hat. Folglich stellt das erste Mobilfunknetz MFN1 das Heimat-Mobilfunknetz des Kommunikationsendgerätes KEG dar.

Dem Kommunikationsgerät KEG ist die Mobilfunkrufnummer "0049 171 98765" als MSISDN zugeordnet. Genau genommen ist die Mobilrufnummer MSISDN nicht dem Kommunikationsendgerät KEG zugeordnet, sondern diese ist im allgemeinen auf einer Datenchipkarte (SIM-Card) gespeichert. Diese SIM-Card kann von einem Mobilfunkteilnehmer in das jeweils zu benutzende Mobiltelefon eingeschoben werden, woraufhin das Mobiltelefon unter eben dieser Mobiltelefonnummer angesprochen werden kann. Da jedoch beim Durchführen einer Mobilfunkverbindung diese SIM-Card immer in genau ein Mobilfunk-Telefon eingeschoben und mit diesem verbunden sein muss, gilt für diese Kommunikationsverbindung, dass die Mobilfunkrufnummer MSISDN diesem Kommunikationsendgerät KEG zugeordnet ist. In diesem Sinne ist die obengenannte Formulierung zu verstehen.

Dem ersten Mobilfunknetz MFN1 ist ein erstes Zahlungssystem ZS1 zugeordnet, über das seitens des Kommunikationsendgerätes KEG veranlasste Zahlungen (die beispielsweise bei Nutzung des Kommunikationsendgerätes KEG für Kauf- und Verkaufvorgänge im sog. Mobile Commerce auftreten können) abgewickelt werden. Zu diesem Zweck ist das erste Zahlungssystem ZS1 verbunden mit einer Rechnungserstellungseinrichtung BL und einer Prepaid-Abrechnungseinrichtung PPS. Über eine "Financial Gateway" genannte Finanzschnittstelle FG ist das erste Zahlungssystem ZS1 weiterhin verbunden mit einem Abrechnungssystem CC einer Kreditkartenorganisation und mit einem Abrechnungssystem BK einer Bank.

Das erste Zahlungssystem ZS1 ist ebenfalls mit einer Netzschnittstelle 12 verbunden, welche den gleichen Aufbau aufweist wie die im Zusammenhang mit der Figur 1 erläuterte Netzschnittstelle 2. Dementsprechend weist die Netzschnittstelle 12 ebenfalls eine Einheit FW und eine Zugriffseinheit MNP-API auf. Letztere ist mit einem MNP-Speicher 11 verbunden, welcher den gleichen Aufbau aufweist wie der im Zusammenhang mit der Figur 1 erläuterte MNP-Speicher 1.

Das auf der rechten Seite der Figur 2 dargestellte zweite Mobilfunknetz MFN2 weist ein zweites Zahlungssystem ZS2 auf, welches zum Veranlassen und Durchführen von im Zusammenhang mit der Nutzung des zweiten Mobilfunknetzes MFN2 auftretenden Zahlungen dient. Das zweite Zahlungssystem ZS2 ist mindestens zeitweise mit einer Verkaufseinrichtung VE verbunden. Eine solche Verkaufseinrichtung VE wird beispielsweise durch einen Rechner dargestellt, über den ein Waren- oder Dienstleistungsanbieter seine Waren oder Dienstleistungen an interessierte Kunden anbietet und/oder auch die Verkaufs- und Abrechnungsvorgänge abwickelt. Sowohl das erste Zahlungssystem ZS1 als auch das zweite Zahlungssystem ZS2 wird von jeweils einem sogenannten Payment Service Provider betrieben. Aufgabe des Payment Service Providers ist es, mit Hilfe des jeweiligen Zahlungssystems Zahlungen abzuwickeln zwischen Zahlungssendern und Zahlungsempfängern. Ein Zahlungssender kann beispielsweise ein Kunde sein, welcher Waren oder Dienstleistungen kauft; ein Zahlungsempfänger kann z. B. durch einen Waren oder Dienstleistungen anbietenden Händler dargestellt sein.

Die Trennung zwischen dem ersten Mobilfunknetz MFN1 und dem zweiten Mobilfunknetz MFN2 wird durch eine senkrechte strichlierte Linie 16 symbolisiert. Diese Linie 16 korrespondiert mit der in der Figur 1 dargestellten waagerechten strichlierten Linie 6.

Im folgenden wird nun ein Ausführungsbeispiel des erfindungsgemäßen Verfahrens im Zusammenhang mit einem Kaufvorgang beschrieben.

Der Benutzer des Kommunikationsendgerätes KEG stellt eine Mobiltelefonverbindung T zu der Verkaufseinrichtung VE eines italienischen Händlers her und veranlasst über diese Mobiltelefonverbindung T den Kauf einer Ware. Über die Mobiltelefonverbindung T wird die Rufnummer 0049 171 98765 des Kommunikationsendgerätes an die Verkaufseinrichtung VE des Händlers übermittelt; der Händler nutzt diese Mobilfunkrufnummer zur Abrechnung des Kaufpreises der Ware.

Der Betreiber der Verkaufseinrichtung VE ist Mobilfunkkunde bei dem zweiten Mobilfunknetz MFN2; das zweite Mobilfunknetz MFN2 stellt demzufolge das Heimatnetz des Verkaufseinrichtungsbetreibers dar. Demzufolge wird von seiten der Verkaufseinrichtung VE standardmäßig das zweite Zahlungssystem ZS2 des zweiten Mobilfunknetzes MFN2 für die Abwicklung von Zahlungsvorgängen benutzt. Zwischen dem Betreiber des zweiten Mobilfunknetzes MFN2 und der Verkaufseinrichtung VE kann ein entsprechender Vertrag bestehen.

Der Betreiber des Kommununikationsendgerätes KEG ist - wie bereits oben erläutert - bei dem ersten Mobilfunknetz MFN1 angemeldet; das erste Mobilfunknetz MFN1 stellt also das Heimatnetz des Betreibers des Kommunikationsengerätes und damit auch das Heimatnetz des Kommunikationsendgerätes dar. Demzufolge werden die unter Benutzung des Kommunikationsendgerätes KEG initiierten oder durchgeführten Kaufvorgänge standardmäßig unter Benutzung des ersten Zahlungssystems ZS1 des ersten Mobilfunknetzes MFN1 abgerechnet.

Aus diesem Grunde besteht nun bei der Abwicklung dieses internationalen Kaufvorganges für das zweite Zahlungssystem ZS2 die Notwendigkeit, das zu dem Kommunikationsendgerät KEG zugehörige, dessen Zahlungen abwickelnde Zahlungssystem (nämlich das Zahlungssystem ZS1) zu identifizieren. Dazu ist auf Seiten des zweiten Zahlungssystems ZS2 nur das Kennzeichen des Kommunikationsendgerätes (in diesem Fall die Mobilfunkrufnummer, welche von der Verkaufseinrichtung VE an das zweite Zahlungssystem ZS2 übertragen wurde) bekannt. Aufgrund des Ländercodes ("0049") der Mobilfunkrufnummer ist dem zweiten Zahlungssystem bekannt, dass das Heimatnetz des Kommunikationsendgerätes KEG in Deutschland liegt. Jedoch kann das zweite Zahlungssystem aus dem Netzcode ("171") der Mobilfunkrufnummer nicht unmittelbar das Heimatnetz des Kommunikationsendgerätes bestimmen. Denn auf Seiten des zweiten Zahlungssystems ZS2 ist nicht bekannt, ob der Teilnehmer mit dem Kommunikationsendgerät KEG bereits einmal oder sogar mehrmals seinen Mobilfunkanbieter gewechselt und seine ursprünglich zugeteilte Mobilfunkrufnummer entsprechend der "Mobile Number Portability" behalten hat.

Es ist nämlich möglich, dass in einem Land mit mehreren Mobilfunknetzen auch mehrere Zahlungssysteme unterschiedlicher Mobilfunkanbieter existieren (z. B. ein Zahlungssystem für das erste Mobilfunknetz MFN1 und ein weiteres Zahlungssystem für ein weiteres nicht dargestelltes Mobilfunknetz). Daher kann in dem dargestellten Beispiel auf Seiten des zweiten Zahlungssystems ZS2 anhand der Mobilfunkrufnummer nicht eindeutig entschieden werden, ob für den mittels des Kommunikationsendgerätes KEG ausgeführten Kaufvorgang das erste Zahlungssystem ZS1 des ersten Mobilfunknetzes oder das nicht dargestellte weitere Zahlungssystem des nicht dargestellten weiteren Mobilfunknetzes zuständig ist. Aus diesem Grund greift das zweite Zahlungssystem ZS2 nun auf den MNP-Speicher 11 zu.

Der weitere Ablauf entspricht dem bereits im Zusammenhang mit der Figur 1 dargestellten Ablauf. Zuerst baut das zweite Zahlungssystem ZS2 über einen Informationskanal 18 eine Verbindung zu der Netzschnittstelle 12 auf. Über diese Verbindung 18 authentifiziert sich das zweite Zahlungssystem ZS2 gegenüber dem Framework FW des OSA Gateways 12. Im Anschluss daran autorisiert das OSA Gateway dieses zweite Zahlungssystem ZS2 für die Nutzung der Zugriffseinheit MNP-API. Nach dieser Authorisierung wird dem zweiten Zahlungssystem ZS2 ermöglicht, über die Zugriffseinheit MNP-API Zugriff auf den MNP-Speicher 11 zu erhalten und entsprechende Zugriffsanfragen an die MNP-Datenbank 11 zu stellen. Bei einer derartigen Zugriffsanfrage übermittelt das zweite Zahlungssystem ZS2 über einen Datenkanal 19 die Mobilfunkrufnummer MSISDN des Mobiltelefons des kaufwilligen Teilnehmers an die Netzschnittstelle 12. Daraufhin erfragt die Netzschnittstelle 12 von dem MNP-Speicher 11 den dem Kommunikationsendgerät KEG zugehörigen Netzbetreiber (in diesem Falle den Betreiber D2) sowie die Server-Adresse des zuständigen ersten Zahlungssystems ZS1. Die Informationen über die Netzbetreiber sowie über die Server-Adresse werden mit Hilfe der Zugriffseinheit MNP-API in einer Antwortnachricht von der Netzschnittstelle 12 über den Datenkanal 19 an das zweite Zahlungssystem ZS2 übermittelt.

Das zweite Zahlungssystem ZS2 verfügt nun über die notwendigen Informationen, um das erste Zahlungssystem ZS1 zu kontaktieren. Unter Nutzung der Server-Adresse dieses ersten Zahlungssystems ZS1 baut es eine Datenverbindung 21 zu dem ersten Zahlungssystem ZS1 auf ("Inter Payment-Service-Provider-Routing"). Nunmehr ist eine korrekte Zahlungsabwicklung zwischen dem zweiten Zahlungssystem ZS2 und dem ersten Zahlungssystem ZS1 möglich ("Inter-Payment-Service-Provider-Payment").

Bisher wurde in diesem Ausführungsbeispiel angenommen, dass der Teilnehmer mit dem Kommunikationsendgerät KEG sein ursprüngliches Mobilfunknetz nicht gewechselt hat. Daher war in dem MNP-Speicher 11 als Heimatnetz das erste Mobilfunknetz MFN1 und als zuständiges Zahlungssystem das erste Zahlungssystem ZS1 eingetragen. Wenn der entsprechende Teilnehmer jedoch bereits das Mobilfunknetz gewechselt hätte (beispielsweise zu dem bereits oben erwähnten nicht dargestellten weiteren Mobilfunknetz) so wäre in dem MNP-Speicher 11, das weitere Mobilfunknetz als das Heimatmobilfunknetz und das weitere Zahlungssystem des weiteren Mobilfunknetzes als das zuständige Zahlungssystem eingetragen. Demzufolge wäre dann die Server-Adresse dieses weiteren Zahlungssystem an das zweite Zahlungssystem ZS2 übermittelt worden, woraufhin das zweite Zahlungssystem eine Datenverbindung zu dem weiteren Zahlungssystem zur Zahlungsabwicklung aufgebaut hätte.

Das erfindungsgemäße Verfahren lässt sich auch vorteilhaft anwenden, wenn ein Festnetzteilnehmer einen portierten Mobilfunkteilnehmer (also einen solchen, der sein ursprüngliches Mobilfunknetz unter Mitnahme der ursprünglichen Mobilfunknummer gewechselt hat) anruft. Um für ein solches Telefongespräch eine kostengünstige Wegeleitung direkt vom Festnetz zu dem jetzt aktuellen Netz des Mobilfunkteilnehmers aufzubauen, benötigt der Festnetzbetreiber ebenfalls in dem MNP-Speicher 11 gespeicherte MNP-Daten. Auch diese Daten können analog zu dem oben beschriebenen Ausführungsbeispiel unter Nutzung der Netzschnittstelle mit der Einheit Framework FW und der Zugriffseinheit MNP-API seitens einer Datenabfrageeinrichtung des Festnetzes (die eine netzexterne Datenverarbeitungseinrichtung bezüglich des Mobilfunknetzes darstellt) aus dem MNP-Speicher abgefragt werden.

Es wurde ein Verfahren und eine Anordnung beschrieben, die einen gesicherten Zugang von mobilfunknetzexternen Einrichtungen zu in "Mobile Number Portability"-Datenbanken abgespeicherten Nummerportierungsdaten ermöglichen. Dieses Verfahren und diese Anordnung lassen sich kostengünstig in vorhandene Netzinfrastrukturen einbetten, da mittels der an sich bekannten OSA-Technologie erfindungsgemäß eine Zugriffseinheit für den Zugriff auf MNP-Daten realisiert wird. Dieses Verfahren ermöglicht beispielsweise eine kostengünstige Wegeleitung aus Festnetzen in Mobilfunknetze bei portierten gerufenen Mobilfunkteilnehmern. Ebenso werden mobilfunkgestützte internationale Kauf- und Zahlungsvorgänge für portierte Mobilfunkteilnehmer unter Benutzung derer Zahlungssysteme ermöglicht.

Besonders vorteilhaft ist es, dass die Zugriffseinheit MNP-API konform zum OSA-Standard ausgelegt ist. Dadurch können erfindungsgemäß aus dem OSA-Standard bekannte Sicherheitsmechanismen und Sicherheitsinfrastrukturen - wie beispielsweise in der Einheit Framework - beim Zugriff auf die MNP-Daten genutzt werden; ein reibungsloses Zusammenarbeiten beispielsweise der Zugriffseinheit mit der Einheit Framework wird dadurch ermöglicht.

## Patentansprüche

1. Verfahren zum Zugreifen auf in einem Mobile Number Portability Speicher - in Folge abgekürzt MNP-Speicher- (1,11) eines ersten Mobilfunknetzes (MFN1) abgelegte MNP-Daten durch eine Datenverarbeitungseinrichtung (4,ZS2) eines zweiten Mobilfunknetzes (MFN2), wobei die MNP-Daten in Form von Zuordnungsdaten zwischen Kennzeichen von Kommunikationsendgeräten (KEG) und Einrichtungen der Heimat-Mobilfunknetze (MFN1) dieser Kommunikationsendgeräte (KEG) vorliegen, wobei bei dem Verfahren,
- von einer signalflußbezogen zwischen der Datenverarbeitungseinrichtung (4,ZS2) und dem MNP-Speicher (1,11) angeordneten Netzschnittstelle (2,12) geprüft wird, ob die Datenverarbeitungseinrichtung (4,ZS2) zum Zugriff auf die MNP-Daten berechtigt ist,
- zum Prüfen der Berechtigung der Datenverarbeitungseinrichtung (4,ZS2) seitens der als Open Service Access-Zwischenknoten ausgestalteten Netzschnittstelle (2,12) eine Authentifizierung und Autorisierung der Datenverarbeitungseinrichtung (4,ZS2) vorgenommen wird,
- bei Vorliegen der Berechtigung
- ein Kennzeichen eines Kommunikationsendgerätes (KEG) durch die Netzschnittstelle (12) von der Datenverarbeitungseinrichtung (ZS2) zu dem MNP-Speicher (11) übertragen wird,
- aus dem MNP-Speicher (11) dem Kommunikationsendgerät (KEG) zugeordnete MNP-Daten ausgelesen werden, und
- diese MNP-Daten über die Netzschnittstelle (12) an die Datenverarbeitungseinrichtung (ZS2) übertragen werden.

2. Verfahren nach Anspruch 1,
**dadurch gekennzeichnet, dass**
die MNP-Daten über eine Netzschnittstelle (2, 12) übertragen werden, welche eine Zugriffseinheit in Form eines OSA-konformen Applikations-Programmier-Interfaces (MNP-API) aufweist.

3. Verfahren nach einem der vorhergehenden Ansprüche,
**dadurch gekennzeichnet, dass**
als MNP-Daten eine Kennung des Heimat-Mobilfunknetzes (MFN1) des Kommunikationsendgerätes (KEG) übertragen wird.

4. Verfahren nach einem der vorhergehenden Ansprüche,
**dadurch gekennzeichnet, dass**
als MNP-Daten eine Adresse einer Eintritts-Vermittlungsstelle (GMSC) des Heimat-Mobilfunknetzes (MFN1) des Kommunikationsendgerätes (KEG) übertragen wird.

5. Verfahren nach einem der vorhergehenden Ansprüche,
**dadurch gekennzeichnet, dass**
als MNP-Daten Zugangsdaten eines dem Kommunikationsendgerät (KEG) zugeordneten Zahlungssystems (ZS1) des Heimat-Mobilfunknetzes (MFN1) des Kommunikationsendgerätes (KEG) übertragen werden.

6. Verfahren nach Anspruch 5,
**dadurch gekennzeichnet, dass**
- von der als Zahlungssystem arbeitenden Datenverarbeitungseinrichtung (ZS2) eine den MNP-Speicher (11) betreffende Zugriffsanfrage an die Netzschnittstelle (12) übertragen wird,
- bei Vorliegen einer Berechtigung der Datenverarbeitungseinrichtung (ZS2) als Kennzeichen des Kommunikationsendgerätes (KEG) eine Mobilfunkrufnummer zu dem MNP-Speicher (11) übertragen wird,
- daraufhin aus dem MNP-Speicher (11) als MNP-Daten die Zugangsdaten des dem Kommunikationsendgerät (KEG) zugeordneten Zahlungssystems (ZS1) des Heimat-Mobilfunknetzes (MFN1) des Kommunikationsendgerätes (KEG) ausgelesen werden, und
- diese Zugangsdaten an die Datenverarbeitungseinrichtung (ZS2) übertragen werden.

7. Anordnung mit
- einem MNP-Speicher (1,11) eines ersten Mobilfunknetzes (MFN1), der MNP-Daten in Form von Zuordnungsdaten zwischen Kennzeichen von Kommunikationsendgeräten (KEG) und Einrichtungen der Heimat-Mobilfunknetze (MFN1) dieser Kommunikationsendgeräte (KEG) enthält, und
- einer als Open Service Access-Zwischenknoten ausgestalteten Netzschnittstelle (2,12) des ersten Mobilfunknetzes (MFN1), die einen Lesezugriff einer Datenverarbeitungseinrichtung (4,ZS2) eines zweiten Mobilfunknetzes (MFN2) auf die MNP-Daten ermöglicht, wobei die Netzschnittstelle eine Einheit zum Verhindern eines unberechtigten Zugriffs der Datenverarbeitungseinrichtung auf den MNP-Speicher aufweist und eine Authentifizierung und Autorisierung der Datenverarbeitungseinrichtung vornimmt.

8. Anordnung nach Anspruch 7,
**gekennzeichnet durch**
ein Teilnehmer-Zahlungssystem (ZS1) des Mobilfunknetzes (MFN1), dessen Zugangsdaten als MNP-Daten in dem MNP-Speicher (11) abgelegt sind.

## Claims

1. Method for accessing MNP data, which is stored in a Mobile Number Portability memory (hereinafter abbreviated as MNP memory) (1, 11) in a first mobile radio network (MFN1), by a data processing device (4, ZS2) of some other mobile radio network (MFN2), with the MNP data in these communication terminals (KEG) being in the form of association data between identifications for communication terminals (KEG) and devices of the home mobile radio networks (MFN1), and with, in this method
- a network interface (2, 12), which in terms of signal flow is arranged between the data processing device (4, ZS2) and the MNP memory (1, 11), checking whether the data processing device (4, ZS2) is authorized to access the MNP data,
- the network interface (2, 12), in the form of an Open Service Access intermediate node, carries out an authentication and authorization of the data processing device (4, ZS2) in order to check the authorization of the data processing device (4, ZS2),
- if the authorization is present,
- an identification for a communication terminal (KEG) is transmitted by the network interface (12) from the data processing device (ZS2) to the MNP memory (11),
- MNP data which is associated with the communication terminal (KEG) is read from the MNP memory (11), and
- this MNP data is transmitted via the network interface (12) to the data processing device (ZS2).

2. Method according to Claim 1,
**characterized in that**
the MNP data is transmitted via a network interface (2, 12) which has an access unit in the form of an OSA-conformal application programming interface (MNP-API).

3. Method according to one of the preceding claims,
**characterized in that**
an identifier for the home mobile radio network (MFN1) of the communication terminal (KEG) is transmitted as the MNP data.

4. Method according to one of the preceding claims,
**characterized in that**
an address of an entry switching center (GMSC) for the home mobile radio network (MFN1) of the communication terminal (KEG) is transmitted as the MNP data.

5. Method according to one of the preceding claims,
**characterized in that**
access data for a payment system (ZS1), which is associated with the communication terminal (KEG), for the home mobile radio network (MFN1) of the communication terminal (KEG) is transmitted as the MNP data.

6. Method according to Claim 5,
**characterized in that**
- a data processing device (ZS2) which operates as a payment system transmits an access request, relating to the MNP memory (11), to the network interface (12),
- if an authorization for the data processing device (ZS2) is present, a mobile radio call number is transmitted to the MNP memory (11) as an identification for the communication terminal (KEG),
- the access data for the payment system (ZS1), which is associated with the communication terminal (KEG), for the home mobile radio network (MFN1) of the communication terminal (KEG) is then read from the MNP memory (11) as MNP data, and
- this access data is transmitted to the data processing device (ZS2).

7. Arrangement having
- an MNP memory (1, 11) for a first mobile radio network (MFN1), which contains MNP data in the form of association data between identifications for communication terminals (KEG) and devices in the home mobile radio networks (MFN1) of these communication terminals (KEG), and
- a network interface (2, 12), in the form of an Open Service Access intermediate node, for the first mobile radio network (MFN1), which allows a data processing device (4, ZS2) of a second mobile radio network (MFN2) to have a read access to the MNP data with the network interface having a unit to prevent unauthorized access from the data processing device to the MNP memory and carrying out an authentication and authorization process for the data processing device.

8. Arrangement according to Claim 7,
**characterized by**
a subscriber payment system (ZS1) for the mobile radio network (MFN1), whose access data is stored as MNP data in the MNP memory (11).

## Revendications

1. Procédé pour accéder à des données MNP déposées dans une mémoire Mobile Number Portability, appelée en abrégé mémoire MNP (1, 11), d'un premier réseau de téléphonie mobile (MFN1) par un dispositif de traitement de données (4, ZS2) d'un second réseau de téléphonie mobile (MFN2), les données MNP étant présentes sous la forme de données d'attribution entre des indicateurs de terminaux de communication (KEG) et de dispositifs des réseaux de téléphonie mobile locaux (MFN1) de ces terminaux de communication (KEG), sachant que dans le procédé,
- une interface de réseau (2, 12) spécifique au flux du signal, disposée entre le dispositif de traitement de données (4, ZS2) et la mémoire MNP (1, 11), vérifie si le dispositif de traitement de données (4, Z2S) est autorisé à accéder aux données MNP,
- pour le contrôle de l'autorisation du dispositif de traitement de données (4, ZS2), une authentification et une autorisation du dispositif de traitement de données (4, ZS2) sont effectuées par l'interface de réseau (2, 12) conçue comme noeud intermédiaire "Open Service Access",
- avec l'existence de l'autorisation
- un indicateur d'un terminal de communication (KEG) est transmis par l'interface de réseau (12) du dispositif de traitement de données (ZS2) à la mémoire MNP (11),
- des données MNP attribuées au terminal de communication (KEG) sont extraites de la mémoire MNP (11), et
- ces données MNP sont transmises par l'interface de réseau (12) au dispositif de traitement de données (ZS2).

2. Procédé selon la revendication 1,
**caractérisé en ce que** les données MNP sont transmises par une interface de réseau (2, 12) qui présente une unité d'accès sous la forme d'une interface de programmation d'application (MNP-API) conforme à OSA.

3. Procédé selon l'une quelconque des revendications précédentes,
**caractérisé en ce que**, en tant que données MNP, un code du réseau de téléphonie mobile local (MFN1) du terminal de communication (KEG) est transmis.

4. Procédé selon l'une quelconque des revendications précédentes,
**caractérisé en ce que**, en tant que données MNP, une adresse d'un centre de commutation d'entrée (GMSC) du réseau de téléphonie mobile local (MFN1) du terminal de communication (KEG) est transmise.

5. Procédé selon l'une quelconque des revendications précédentes,
**caractérisé en ce que**, en tant que données MNP, des données d'accès d'un système de paiement (ZS1), attribué au terminal de communication (KEG), du réseau de téléphonie mobile local (MFN1) du terminal de communication (KEG) sont transmises.

6. Procédé selon la revendication 5,
**caractérisé en ce que**
- une demande d'accès concernant la mémoire MNP (11) est transmise par le dispositif de traitement de données (ZS2) travaillant comme système de paiement à l'interface de réseau (12),
- avec l'existence d'une autorisation du dispositif de traitement de données (ZS2), un numéro d'appel de téléphonie mobile est transmis à la mémoire MNP comme indicateur du terminal de communication (KEG),
- ensuite les données d'accès du système de paiement (ZS1), attribué au terminal de communication (KEG), du réseau de téléphonie mobile local (MFN1) du terminal de communication (KEG) sont extraites de la mémoire MNP (11) sous la forme de données MNP, et
- ces données d'accès sont transmises au dispositif de traitement de données (ZS2).

7. Dispositif comprenant :
- une mémoire MNP (1, 11) d'un premier réseau de téléphonie mobile (MFN1), qui contient des données MNP sous la forme de données d'attribution entre des indicateurs de terminaux de communication (KEG) et des dispositifs des réseaux de téléphonie mobile locaux (MFN1) de ces terminaux de communication (KEG), et
- une interface de réseau (2, 12) conçue comme noeud intermédiaire Open Service Access du premier réseau de téléphonie mobile (MFN1), qui permet un accès de lecture d'un dispositif de traitement de données (4, ZS2) d'un second réseau de téléphonie mobile (MFN2) aux données MNP, l'interface de réseau présentant une unité pour empêcher un accès non autorisé du dispositif de traitement de données à la mémoire MNP et effectue une authentification et une autorisation du dispositif de traitement de données.

8. Dispositif selon la revendication 7, **caractérisé par**
un système de paiement d'abonné (ZS1) du réseau de téléphonie mobile (MFN1), dont les données d'accès sont déposées sous la forme de données MNP dans la mémoire MNP (11).
